# EUROPEAN PATENT SPECIFICATION

(11) **EP 4 488 961 B1**
(45) Date of publication and mention of the grant of the patent: **22.10.2025**
(21) Application number: 23183951.5
(22) Date of filing: 06.07.2023
(51) Int. Cl.: G06V 20/59, G06V 40/16, G06V 40/20

(54) **METHOD FOR PROVIDING CONTROL DATA CONFIGURED TO CONTROL A VEHICLE**
VERFAHREN ZUR BEREITSTELLUNG VON STEUERDATEN ZUR STEUERUNG EINES FAHRZEUGS
PROCÉDÉ DE FOURNITURE DE DONNÉES DE COMMANDE CONFIGURÉES POUR COMMANDER UN VÉHICULE

(43) Date of publication of application: 08.01.2025
(73) Proprietor: Volvo Car Corporation, 405 31 Göteborg (SE)
(72) Inventor: GIBANICA, Mladen, 40531 Göteborg (SE); ANDERSSON, Jonas, 40531 Göteborg (SE); BJÖRKLUND, Tomas, 40531 Göteborg (SE)
(74) Representative: Maiwald GmbH

(56) References cited:
- JP-A- S6 261 830
- US-A1- 2010 214 105
- US-A1- 2017 140 232
- US-A1- 2021 380 115

## Description

### TECHNICAL FIELD

The present disclosure relates to a method for providing control data configured to control a vehicle, a data processing system, a vehicle with a data processing system for providing control data and/or means for transmitting the vehicle data to a cloud and/or a second vehicle.

### BACKGROUND ART

Computer vision algorithms and monitoring camera systems in vehicles may be used to identify the occupants in the vehicles in terms of their spatial position. However, these algorithms and systems are not able to identify the exact spatial position of each occupant at any given time. Accordingly, such algorithms and systems may not reliably be used by the vehicle, in particular not for controlling the vehicle or systems thereof.

US 2021/380115 A1 discloses an apparatus and method for predicting vehicle collisions and intersection violations using cameras to monitor both the external environment and the driver's state.

US 2017/140232 A1 discloses a method for generating control data to manage vehicle safety systems by using image-based biometric data of occupants.

### SUMMARY

In view of the above, it is an object of the present disclosure to provide an enhancement for vehicle control in view of spatial positioning of one or more occupants inside the vehicle.

The invention is as defined in claim 1.

A method for providing control data for controlling a vehicle is disclosed, comprising:
providing at time intervals biometric data of an occupant of the vehicle based on image data, wherein the biometric data identifies one or more body parts of an occupant of the vehicle;utilizing a first machine learning algorithm, wherein the first machine learning algorithm is at least configured to detect missing key points in the provided biometric data and to determine the missing key points in the provided biometric data, wherein the key points indicate spatial positions of the one or more body parts of the occupant;utilizing a second machine learning algorithm, wherein the second machine learning algorithm is at least configured to provide dynamic occupant data for the occupant based on the provided biometric data and the determined missing key points, the dynamic occupant data comprising a prediction of a movement of the occupant; andproviding control data configured to control at least one safety means of the vehicle based on the predicted movement of the occupant.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

For providing the biometric data, the method may comprise a further step of analyzing the image data. The biometric data may comprise one or more values. The values may be based on biometric identifiers, which may be distinctive and identifiable features of humans used to identify a spatial position of an occupant or one or more of his body parts, e.g., his head. Accordingly, the analysis of the image data may be performed to generate the values based on the biometric identifiers in the image data. Biometric identifiers may, for example, be physiological features related to the shape of the body of the occupants or one or more of the body parts of the occupants. For example, the biometric identifiers may be eyes, nose, shoulder and/or other relevant points on body parts, such as the head, of the occupant. The biometric data may comprise key points as values, which may be represented in spatial coordinates, for example, and correspond to the position of the biometric identifiers of the occupant. Accordingly, the key points may indicate the spatial position of biometric identifiers of an occupant.

The image data may comprise, for example, separate images and/or a plurality of images, which may be composed into, for example, a moving visual image stream or video. The image data may be configured as spatial image data. The image data may be received image data. Accordingly, in a separate step, the method may comprise receiving the image data. Also, the method may comprise recording the image data. The image data may be provided by, for example, a computing unit, an imaging unit of the vehicle and/or a data stream of a computing network. The imaging unit may be a camera unit configured to provide 2D and/or 3D image data.

The image data may be incomplete. This means, that the image data may not be a full representation of the occupant or one or more of his body parts, such as his head, for example. In particular, one or more biometric identifiers may not be seen in the image data. For example, when the imaging unit in the vehicle is only generating frontal image data of the occupants but not also side or back image data of the occupants. Accordingly, values, in particular key points, of the occupant may be missing to identify the exact spatial position of the occupant or one or more of his body parts.

The method provides an enhancement for vehicle control in view of the spatial positioning of one or more occupants inside the vehicle because the control data provided by the method is based on enhanced dynamic occupant data. The dynamic occupant data is enhanced first, by the first machine learning algorithm, and second, by the second machine learning algorithm. Both algorithms may be, in separate steps of the method, provided such that they may also be referred to herein as provided machine learning algorithms.

The first machine learning algorithm detects missing values. The missing values may not be included in or cannot be directly inferred from the image data, for example. For example, the missing values may be missing because these are not being detected by the imaging unit of the vehicle, e.g., as explained above. In this case, an exact spatial position of the occupant or one or more of his body parts, such as his head, may not be inferred from the biometric data. Accordingly, reliable control data based on such incomplete spatial position of the occupant could not be provided. But the method determining the missing values in the provided biometric data by the first machine learning algorithm solves the issue of missing values, which may be added to the biometric data. Specifically, the first machine learning algorithm may be trained to estimate the missing values. In particular, the first machine learning algorithm may be trained based on a variety of different body shapes and body parts and, based on the values in the biometric data and, optionally, correlating these to known body shapes and body parts, estimate the missing values. The at least one missing values, in particular key points, of an occupant, for example, in the back of the head or covered eyes or ears, based solely on visible key points in the image data, may be estimated by the first machine learning algorithm. In particular, the first machine learning algorithm may add and/or complement values of the biometric data and/or the at least one missing values.

Furthermore, the identified personalized models of each occupant may allow for a physical interpretation and may serve as a basis for dynamical prediction models, whereby a personalized model for each occupant may be important, as it could make the estimated coordinates more realistic, and representative of individual's actual shapes compared to similar solutions using models based on population level biometrics.

The second machine learning algorithm provides dynamic occupant data, which comprises a prediction of a movement of the occupant. Specifically, the second machine learning algorithm may be trained to predict the movement of the occupant. In particular, the first machine learning algorithm may be trained based on a variety of different body shapes and body parts and their typical movement in vehicles. The typical movement may include movement based on occupant function, e.g., driver or co-driver, and the situation, e.g., a car crash situation. The prediction of the movement of the occupant may comprise or be expressed as one or more values of biometric data, in particular key points, as described above. These may accordingly represent the movement of the occupant according to the prediction, e.g., the head of the occupant towards or away from the headrest of his seat in the vehicle. In particular, the second machine learning algorithm may be configured to generate a motion pattern of the occupant and may be further configured to predict the movement of the occupant based on the motion pattern. The second machine learning algorithm may also use the image data additionally to the biometric data in order to generate the dynamic occupant data. The dynamic occupant data may comprise the occupant's movement pattern, whereby repetitive movements, movements when external influences occur, and/or random occupant movements may be included, for example. External influences may be driving maneuvers of the vehicle, whereby the driving maneuvers may comprise braking maneuvers, acceleration maneuvers, and/or steering maneuvers of the vehicle.

Now, given that the control data is based on substantially complete biometric data and includes a prediction of movement, an improved and reliable control of the vehicle, in particular of one or more systems of the vehicle, such as a safety system, may be planned.

The control data may be configured to control, for example, a control device or control unit of the vehicle, braking maneuvers, acceleration maneuvers, and/or steering maneuvers of the vehicle. Thereby, the vehicle may be controlled in a preferred manner with respect to occurring driving maneuvers by means of the provided dynamic occupant data, whereby the control is performed in particular in view of the predicted movement of the occupant. In this respect, such a control of the vehicle may preferably also be used to protect at least one occupant of the vehicle, in particular in the event of a driving maneuver that is unexpected for the at least one occupant or a driving maneuver that requires quick action of a driver of the vehicle. Here, unexpected driving maneuvers and/or driving maneuvers that require quick action may be driving maneuvers that contribute to the avoidance of, for example, an accident.

In an example, the control data may be configured to control at least one safety means of the vehicle. For example, by means of the method of this disclosure, undetected key points may be estimated and movements of an occupant may be predicted including these key points, so that the control units in the vehicle may be controlled, for example, to adaptively adjust the settings of safety means of the vehicle, in order to set them up in particular for a current and predicted position of the occupant. In this regard, imperfect settings that may lead to less than optimal or potentially dangerous results may be adjusted for the case when an active safety function is triggered by the vehicle. One such example of an active safety function may be if an airbag were deployed at an angle that would injure an occupant at that moment based on his current position. The method now allows to adjust control the airbag as an example of a safety means to prevent injury. For example, the control may include timing the deployment of the airbag, choice of deployment of one or more airbags, etc. The at least one safety means may, for example, be an airbag or airbag system, an anti-lock braking system (ABS), an electronic stability control (ESC), a traction control system (TCS or ASR), a brake assistant brake assist, a brake system, a chassis, at least one headlight, at least one seat and/or a safety belt or safety belt tensioning actuator of the vehicle.

Also, or alternatively, the control data may be configured to control, for example, audio settings of at least one speaker of the vehicle, AC settings of the vehicle, sunshade means of the vehicle and/or a seat of the vehicle.

In an example, the biometric data may comprise at least values of a head of the occupant of the vehicle. The values of a head of the occupant may be, for example, key points of parts of the head such as the nose, ears, and/or eyes. The key points of the head may be predetermined by a computer and/or algorithm, whereby the predetermined key points of the head may be defined spatial positions or, in other words, points in space at which the computer and/or algorithm performs evaluation, whereby these points in space may be described with vector space data.

Furthermore, the first machine learning algorithm may use a 3D camera and a computer vision technology in order to determine the missing key points by creating personalized 3D models of a head of each occupant. Further, a combination of 2D camera with a depth measuring sensor (e.g. radar or laser) or depth predicting software, for example through a machine learning algorithm, may be used.

In an example, the biometric information of the head may be indicative of a spatial position of the head in the inside of the vehicle. The values, in particular key points as described above, of the head may comprise vector space data of the head inside of the vehicle, for example of the actual position of the head inside of the vehicle, wherein the vector space data may refer to a calculated mid-point or centerpoint of the head of the respective occupant.

In an example, the method may further comprise determining a relative spatial position of the head with respect to one or more vehicle structures of the vehicle, the control data being further based on the relative spatial position of the head. The vehicle structure may be a headrest of a seat of the vehicle, for example. In this respect, the head position in relation to a headrest of the vehicle may be one important attribute for the control of safety means of vehicles in particular. For example, a distance between the head and the headrest determined based on the relative spatial position of the head may be an important information when controlling safety means.

The relative distances between a driver's or occupant's head position and various important vehicle structures in the vehicle, for example, parts of the seat, steering wheel, and pillars of the vehicle, may be important from a safety perspective and may determine the risk and degree of injury to a person, for example, in the event of an accident. Accordingly, including this relative distance based on the relative spatial position of the head in the method by basing the control data thereon, increases the safety of the occupants in the vehicle.

As described above, the missing values, in particular key points, that may be needed for the second machine learning algorithm, e.g., for the head of the occupant, may be frequently hidden key points such as the center of the head, certain key points on the back or sides of the head, and these, according to the method of this disclosure, may be imputed by the first machine learning algorithm. However, the number of key points to be imputed may theoretically be arbitrarily large, but should preferably comprise only certain and relevant specific head key points, in particular relevant with respect to the relative spatial position of the one or more vehicle structures. For example, if all relevant key points are available, the point at the back of the head may be used to calculate the distance to the head restraint and, in principle, to any other vehicle structure of the vehicle with known in-vehicle coordinates of the one or more vehicle structures, such as the headrest, the windows, the roof, etc. The in-vehicle coordinates of all parts of the vehicle may be stored and provided in the method.

Based on the accurate modeling of the dynamics of the head and predicted future movement in the near future, a longer window of opportunity to control the vehicle, in particular safety means, in dangerous situations may be provided. This may improve the safety means or other means or systems controlled by the control data that is being provided by the method.

In an example, the dynamic occupant data may be provided at time intervals. The time intervals may be predefined intervals that comprise a fixed defined interval time period or a variable defined interval time period. The fixed interval period may be predetermined, for example, by the manufacturer of a vehicle, the computer control system of a vehicle and/or in respect of the used computer control systems of a vehicle. Furthermore, the variable defined interval period may be amended, for example, during use with regard to driving situations of the vehicle. The predefined intervals may be configured to provide the dynamic occupant data in a range of 1 to 1000 microseconds [us] or in a range of 1 to 1000 milliseconds [ms], preferably in a range of 10 to 100 [us] or in a range of 1 to 33 [ms], for example. Adaptive safety functions in vehicles may often only operate within predefined time intervals, for example, from the time the first signal identifying a critical scenario is received until the time the safety function is fully activated and deployed. Therefore, for example, an airbag might activate and fully deploy within the time interval of a detected risk scenario (e.g., a collision) before an occupant's body and/or head moves in a manner that might cause harm. Accordingly, the time intervals may correspond to or be predefined according to such adaptive safety functions, for example.

The time intervals may correspond to a frame of the image data. The frame of the image data may, for example, be configured to represent at least a portion of the inside of the vehicle. Furthermore, the means that provide the image data, e.g., imaging unit, may be configured to provide the frame for example in dependence of the predefined interval.

In an example, the dynamic occupant data may be provided in real-time. For example, the real-time condition may comprise, that at least a processing of the frame may be done with a high priority. Moreover, the processing may at least be faster than the acquiring of frames, images and/or samples of the camera means providing the image data, in order that a previous frame, previous image and/or previous sample is processed before a following frame, following image and/or following sample have to be processed.

For example, the relative position of the head may be determined in real time and used to adaptively adjust the safety features of a vehicle. Further, based on real-time detections (or estimates) of head key point coordinates, may be extended to include a separate dynamic model that may predict the next images with full spatial key point coverage of the head. This, in turn, allows for a much longer time interval for providing safety functions, and thus makes a larger class of safety functions in a vehicle practical.

In view of such critical time dependencies, the solution may be, in addition to estimating the 3D head key point coordinates, to also forecast the dynamics of the head and hence predict the near-term propagation of the head key point coordinates and related distance measures to different parts in the car. The forecasted dynamics, in addition to the real-time coordinate estimations, may for example allow safety features in the car to operate within a larger time interval than would have otherwise been possible.

In an example, the biometric data may comprise a value matrix, which may comprise the values of the biometric data and/or the dynamic occupant data may comprise a value matrix, which may comprise values of the dynamic occupant data. The values may be represented by spatial position coordinates, as explained above. The value matrix may be configured to save the biometric data and/or dynamic occupant data by means of vector space data. For example, values of the vector space data may be saved in the columns of the value matrix and/or different vector space data may be saved in different rows of the value matrix. The use of a value matrix may be effective in both storage and evaluation, since only a small matrix, depending on the number of values, in particular key points, may be saved and simple matrix-vector multiplication may be required for evaluation of the provided dynamic occupant data to provide the control data.

In an example, the first provided machine learning algorithm may be configured to determine the missing values based on the image data. The first machine learning algorithm may further be configured to improve the quality of the biometric data in view of, for example, noise reduction of the biometric data. The first machine learning algorithm may also be configured, for example, to quantify the biometric data.

In an example, the first provided machine learning algorithm may be trained with the biometric data and/or the second provided machine learning algorithm may be trained with the biometric data and the dynamic occupant data. For example, the first provided machine learning algorithm may be trained in order to detect and process important facial features in the image data. For example, the reliability of the first machine learning algorithm and/or the second machine learning algorithm may be increased by correlations between values, in particular key points, of the occupant. Therefore, the coordinates of a few key points may be sufficient in order to derive the coordinates of the other missing biometric identifiers, provided that an algorithm has learned the correlations between the key points of a given individual. The second provided machine learning algorithm may for example use the head geometry of an occupant to determine the possible movements of the occupant in space. Further, the second machine learning algorithm may be trained using the biometric data, for example, also comprising generalized coordinates, whereby the generalized coordinates may have to comprise at least sufficient values and/or be of a quality to predict the possible movements of the occupant in space. In other words, the second machine learning algorithm may be trained to learn not only the most significant key points of the occupant but also their short-term dynamics. Hence, the second machine learning algorithm may generate models of the head, which, once properly trained, may forecast the head dynamics over a short, but significant, time-period into the future. Such predictions may be very valuable for active safety systems.

In an example, the image data comprises at least a first view of the occupant and a second view of the occupant. Furthermore, the image data may comprise multiple views of the occupant, whereby the multiple views comprise representations of the occupant from different sides or angles.

In addition, the first machine learning algorithm may be configured to determine the missing values based on the multiple views and/or to optimize the quality of the values of the biometric data.

Further, real-time information about the in-vehicle coordinates of a driver's or passenger's head features, for example, estimated center of the head, corner points of the head such as eyes, ears, and nose, estimated back and top of the head, may be important in order to mitigate any potential injuries in critical situations. However, it may often be the case that the corner points of the head are obscured by the system's field of view, so that calculation of these corner points of the head may be necessary. Furthermore, it may be necessary to predict the movements of the head in particular in order to adequately control in-vehicle safety means for the mitigation.

A further aspect of the present disclosure relates to a data processing system for carrying out the disclosed method.

A further aspect of the present disclosure relates to a computer program element with instructions, which, when executed on a computing device of a computing environment, is configured to carry out method of this disclosure.

A further aspect of the present disclosure relates to a vehicle with the data processing system of this disclosure.

It is noted that the above examples may be combined with each other irrespective of the aspect involved. Accordingly, the method may be combined with structural features and, likewise, the data processing system and vehicle may be combined with features described above with regard to the method.

These and other aspects of the present disclosure will become apparent from and elucidated with reference to the examples described hereinafter.

### BRIEF DESCRIPTION OF DRAWINGS

In the following, the disclosure is described exemplarily with reference to the enclosed figures, in which:
- **Fig. 1**: is an example of a diagram of the disclosed method;
- **Fig. 2**: is a schematic illustration of an overview of an implementation of the disclosed system;
- **Fig. 3**: is a schematic illustration of an example of a first view provided by at least one camera means of the disclosed system;
- **Fig. 4**: is a schematic illustration of a first example of values in a matrix of biometric data of the disclosed method;
- **Fig. 5**: is a schematic illustration of a second example of values in a matrix of biometric data of the disclosed method; and
- **Fig. 6**: is an exemplary illustration of the process of the disclosed method in the disclosed system.

Notably, the figures are merely schematic representations and serve only to illustrate examples of the present disclosure. Identical or equivalent elements are in principle provided with the same reference signs.

### DETAILED DESCRIPTION

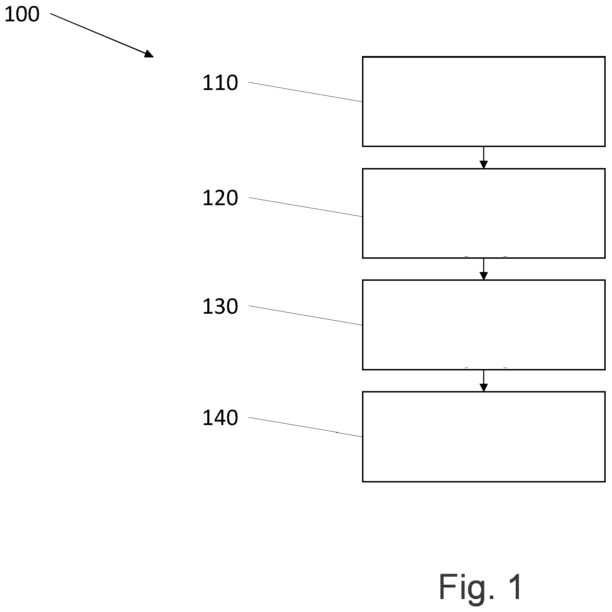

Fig. 1 shows an example of a diagram of the disclosed method 100 configured to control a vehicle, comprising: providing 110 biometric data of an occupant of the vehicle based on received image data; utilizing 120 a first provided machine learning algorithm, whereby the first provided machine learning algorithm is at least configured to detect missing values in the provided biometric data and to determine values of the missing values in the provided biometric data; utilizing 130 a second provided machine learning algorithm, whereby the second provided machine learning algorithm is at least configured to provide generated dynamic occupant data for the occupant based on the provided biometric data to predicting a movement of the occupant; and providing 140 control data configured to control the vehicle based on the provided dynamic occupant data.

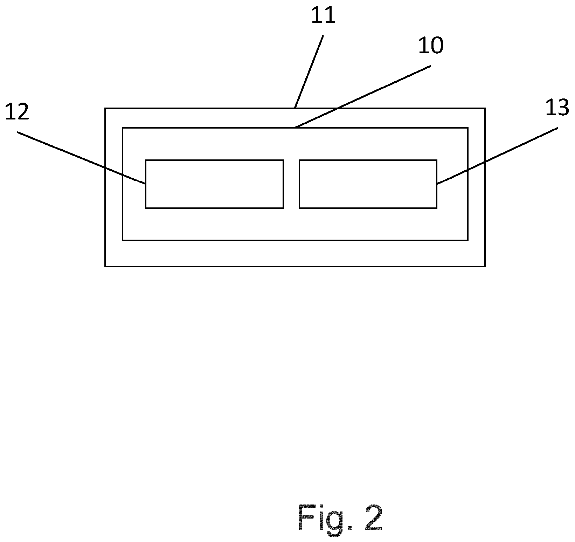

Fig. 2 shows a schematic illustration of an overview of an implementation of the disclosed data processing system 10 for carrying out the disclosed method in a vehicle 11, with a computing device 12 and a computer-readable medium or storage 13 comprising the disclosed computer program element.

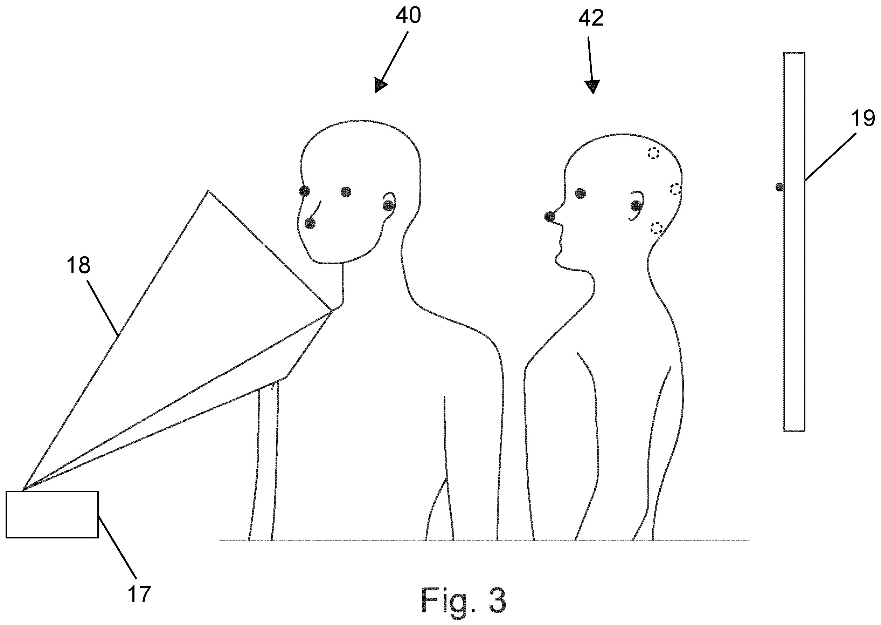

Fig. 3 shows a schematic illustration of an example of a first view 40 provided by at least one camera means 17 of a vehicle 11, whereby the first view 40 is shown from the front and a second view 42 is shown from the left side of a schematic occupant, whereby a detection area 18 of the camera means 17 only detects the first side view 40.

Furthermore, within the first view 40 and the second view 42, values in the form of key points of the occupant are displayed by means of round filled-in dots, whereby these key points have been captured by the camera means 17. In addition, these key points may be captured as vector space data.

In the second view 42, a seat 19 of a vehicle is also shown, whereby at least one key point of the seat 19 is calculated based on adjustment parameters of the seat 19 and/or maybe detected by another camera means. In this regard, the at least one key point of the seat 19 is detected in order to determine a distance of a head of the occupant from the seat 19.

Moreover, in the second view 42, missing key points are displayed as round not-filled dots with a dashed border, whereby these missing key points are not detected by the detection area 18.

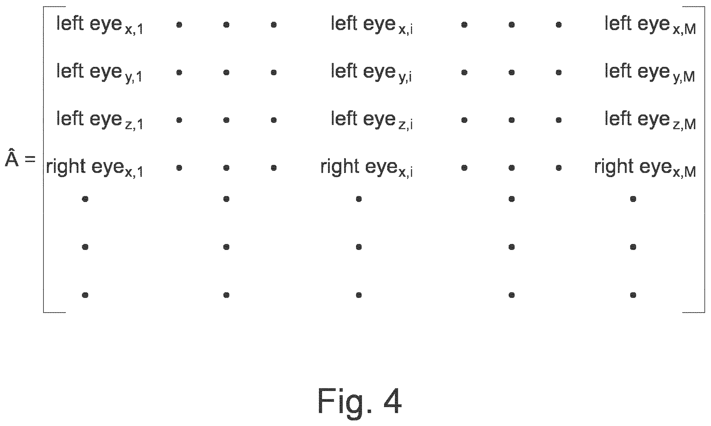

Fig. 4 shows a schematic illustration of a first example of values in a matrix of biometric data of the disclosed method, whereby the matrix comprises three key points of the left eye and one key point of the right eye.

Thereby, the respective key points comprise three values each, which are configured to determine the vector space of the respective key point, whereby each of the three values is included.

In other words, the matrix Â comprises key points in the rows and frames of a camera means of the vehicle in the columns. This means that each column is a frame with the coordinates of the key points in 3D space listed in 3 rows for M frames.

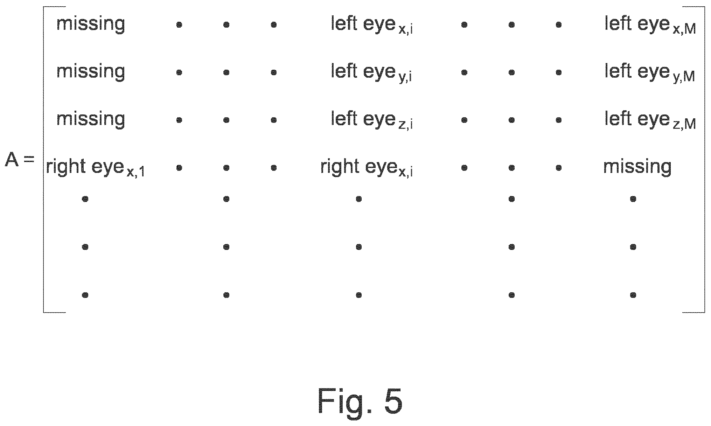

Fig. 5 shows a schematic illustration of a second example of values in a matrix of biometric data of the disclosed method, whereby the matrix comprises three key points of the left eye and one key point of the right eye.

Thereby, the respective key points comprise three values each, which are configured to determine the vector space of the respective key point.

Furthermore, in this second example, values are missing for each key point compared to the matrix of Fig. 4, whereby x,1, y,1 and z,1 values of a left eye key point are missing and the x,M, y,M and z,M of the right eye key point is missing.

In other words, in examples, the matrix A comprises frames which are missing some key points and/or comprise incomplete data due to occlusions in a computer vision system of the vehicle and/or camera means of the vehicle.

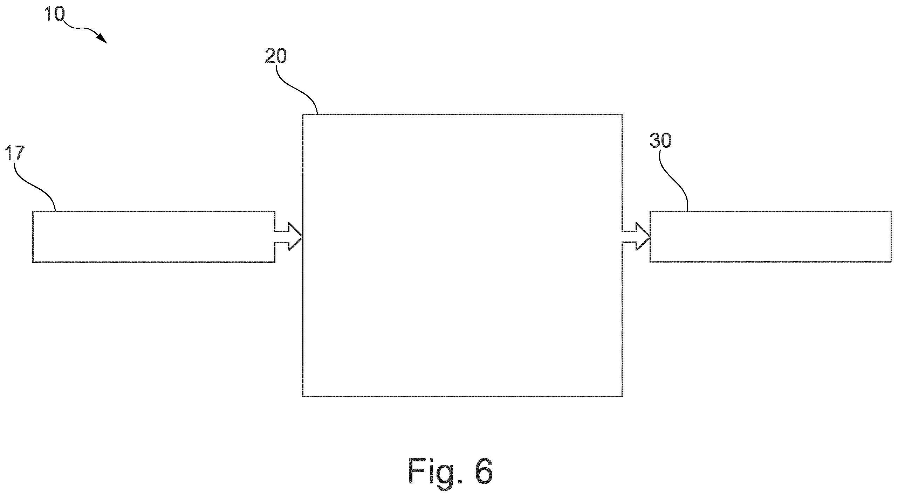

Fig. 6 shows an exemplary illustration of the process of the disclosed method in the disclosed system 10, whereby the process comprises a camera system 17, a computer system 20 and a control means 30.

In this context, the camera system is at least configured to acquire image data or maybe video data. The computer system is at least configured to acquire 3D coordinates of biometric identifiers, impute missing biometric identifiers, estimate head geometry and predicted head movements. The control unit is at least configured to update configurations of the vehicle, for example, the updated configurations may be configured to control the vehicle.

The acquisition of 3D coordinates in the process comprises either prediction of 2D biometric identifiers to identify 3D coordinates and/or direct acquisition of 3D coordinates by the camera means.

### LIST OF REFERENCE SIGNS

- 10: data processing system
- 11: vehicle
- 12: computing device
- 13: computer-readable medium
- 17: camera means
- 18: detection area
- 19: seat
- 20: computer system
- 30: control means
- 40: first view
- 42: second view
- 100: method
- 110: providing biometric data of an occupant
- 120: providing a first machine learning algorithm
- 130: utilizing the first machine learning algorithm
- 140: providing a second machine learning algorithm
- 150: providing dynamic occupant data
- 160: providing control data

## Claims

1. A method (100) for providing control data configured to control a vehicle (11), comprising:
providing (110) at time intervals biometric data of an occupant of the vehicle based on image data, wherein the biometric data identifies one or more body parts of an occupant of the vehicle;
utilizing (120) a first machine learning algorithm, wherein the first machine learning algorithm is at least configured to detect missing key points in the provided biometric data and to determine the missing key points in the provided biometric data, wherein the key points indicate spatial positions of the one or more body parts of the occupant;
utilizing (130) a second machine learning algorithm, wherein the second machine learning algorithm is at least configured to provide dynamic occupant data for the occupant based on the provided biometric data and the determined missing key points, the dynamic occupant data comprising a prediction of a movement of the occupant; and
providing (140) control data configured to control at least one safety means of the vehicle (11) based on the predicted movement of the occupant.

2. The method (100) according to claim 1, wherein the biometric data comprises at least key points of a head of the occupant of the vehicle (11).

3. The method (100) according to claim 2, wherein the key points are indicative of a spatial position of the head inside the vehicle (11).

4. The method (100) according to claim 3, wherein the method (100) further comprises determining a relative spatial position of the head with respect to one or more vehicle structures of the vehicle (11), the control data being further based on the relative spatial position of the head.

5. The method (100) according to any one of the preceding claims, wherein the dynamic occupant data are provided at time intervals.

6. The method (100) according to any one of the preceding claims, wherein the dynamic occupant data are provided in real-time.

7. The method (100) according to any one of the preceding claims, wherein the biometric data comprises a value matrix and/or the dynamic occupant data comprises a value matrix.

8. The method (100) according to any one of the preceding claims, whereby the first machine learning algorithm is configured to determine the missing key points based on the image data.

9. The method (100) according to any one of the preceding claims, whereby the first provided machine learning algorithm is trained with the biometric data and/or the second provided machine learning algorithm is trained with the biometric data and the dynamic head data.

10. The method (100) according to any one of the preceding claims, whereby the image data comprises at least a first view (40) of the occupant and a second view (42) of the occupant.

11. A computer program element with instructions, which, when executed on a computing device of a computing environment, is configured to carry out the method (100) according to any one of the preceding claims.

12. A data processing system (10) comprising means for carrying out the method (100) according to any one of claims 1 to 11.

13. A vehicle (11) comprising a data processing system according to claim 12.

## Patentansprüche

1. Verfahren (100) zum Bereitstellen von Steuerdaten, die zum Steuern eines Fahrzeugs (11) konfiguriert sind, umfassend:
Bereitstellen (110) biometrischer Daten eines Insassen des Fahrzeugs in Zeitintervallen auf der Grundlage von Bilddaten, wobei die biometrischen Daten einen oder mehrere Körperteile eines Insassen des Fahrzeugs identifizieren;
Verwenden (120) eines ersten maschinellen Lernalgorithmus, wobei der erste maschinelle Lernalgorithmus zumindest konfiguriert ist, um fehlende Schlüsselpunkte in den bereitgestellten biometrischen Daten zu erkennen und die fehlenden Schlüsselpunkte in den bereitgestellten biometrischen Daten zu bestimmen, wobei die Schlüsselpunkte räumliche Positionen des einen oder der mehreren Körperteile des Insassen anzeigen;
Verwenden (130) eines zweiten maschinellen Lernalgorithmus, wobei der zweite maschinelle Lernalgorithmus zumindest konfiguriert ist, um dynamische Insassendaten für den Insassen auf der Grundlage der bereitgestellten biometrischen Daten und der bestimmten fehlenden Schlüsselpunkte bereitzustellen, wobei die dynamischen Insassendaten eine Vorhersage einer Bewegung des Insassen umfassen; und
Bereitstellen (140) von Steuerdaten, die so konfiguriert sind, dass sie mindestens ein Sicherheitsmittel des Fahrzeugs (11) auf der Grundlage der vorhergesagten Bewegung des Insassen steuern.

2. Verfahren (100) nach Anspruch 1, wobei die biometrischen Daten zumindest Schlüsselpunkte eines Kopfes des Insassen des Fahrzeugs (11) umfassen.

3. Verfahren (100) nach Anspruch 2, wobei die Schlüsselpunkte eine räumliche Position des Kopfes innerhalb des Fahrzeugs (11) anzeigen.

4. Verfahren (100) nach Anspruch 3, wobei das Verfahren (100) ferner die Bestimmung einer relativen räumlichen Position des Kopfes in Bezug auf eine oder mehrere Fahrzeugstrukturen des Fahrzeugs (11) umfasst, wobei die Steuerdaten ferner auf der relativen räumlichen Position des Kopfes basieren.

5. Verfahren (100) nach einem der vorhergehenden Ansprüche, wobei die dynamischen Insassendaten in Zeitintervallen bereitgestellt werden.

6. Verfahren (100) nach einem der vorangehenden Ansprüche, wobei die dynamischen Insassendaten in Echtzeit bereitgestellt werden.

7. Verfahren (100) nach einem der vorhergehenden Ansprüche, wobei die biometrischen Daten eine Wertematrix umfassen und/oder die dynamischen Bewohnerdaten eine Wertematrix umfassen.

8. Verfahren (100) nach einem der vorangehenden Ansprüche, wobei der erste maschinelle Lernalgorithmus so konfiguriert ist, dass er die fehlenden Schlüsselpunkte auf der Grundlage der Bilddaten bestimmt.

9. Verfahren (100) nach einem der vorangehenden Ansprüche, wobei der erste vorgesehene maschinelle Lernalgorithmus mit den biometrischen Daten trainiert wird und/oder der zweite vorgesehene maschinelle Lernalgorithmus mit den biometrischen Daten und den dynamischen Kopfdaten trainiert wird.

10. Verfahren (100) nach einem der vorangehenden Ansprüche, wobei die Bilddaten mindestens eine erste Ansicht (40) des Insassen und eine zweite Ansicht (42) des Insassen umfassen.

11. Computerprogrammelement mit Befehlen, das, wenn es auf einem Computergerät einer Computerumgebung ausgeführt wird, so konfiguriert ist, dass es das Verfahren (100) nach einem der vorhergehenden Ansprüche ausführt.

12. Datenverarbeitungssystem (10) mit Mitteln zur Durchführung des Verfahrens (100) nach einem der Ansprüche 1 bis 11.

13. Fahrzeug (11) mit einem Datenverarbeitungssystem nach Anspruch 12.

## Revendications

1. Méthode (100) pour fournir des données de contrôle configurées pour contrôler un véhicule (11), comprenant :
fournir (110) à intervalles de temps des données biométriques d'un occupant du véhicule sur la base de données d'image, les données biométriques identifiant une ou plusieurs parties du corps d'un occupant du véhicule ;
utiliser (120) un premier algorithme d'apprentissage automatique, dans lequel le premier algorithme d'apprentissage automatique est au moins configuré pour détecter les points clés manquants dans les données biométriques fournies et pour déterminer les points clés manquants dans les données biométriques fournies, dans lesquelles les points clés indiquent les positions spatiales d'une ou plusieurs parties du corps de l'occupant ;
utiliser (130) un deuxième algorithme d'apprentissage automatique, dans lequel le deuxième algorithme d'apprentissage automatique est au moins configuré pour fournir des données dynamiques sur l'occupant en fonction des données biométriques fournies et des points clés manquants déterminés, les données dynamiques sur l'occupant comprenant une prédiction d'un mouvement de l'occupant ; et
fournir (140) des données de contrôle configurées pour contrôler au moins un moyen de sécurité du véhicule (11) en fonction du mouvement prédit de l'occupant.

2. La méthode (100) selon la revendication 1, dans lequel les données biométriques comprennent au moins des points clés d'une tête de l'occupant du véhicule (11).

3. La méthode (100) selon la revendication 2, dans lequel les points clés sont indicatifs d'une position spatiale de la tête à l'intérieur du véhicule (11).

4. La méthode (100) selon la revendication 3, dans lequel le méthode (100) comprend en outre la détermination d'une position spatiale relative de la tête par rapport à une ou plusieurs structures du véhicule (11), les données de contrôle étant en outre basées sur la position spatiale relative de la tête.

5. La méthode (100) selon l'une quelconque des revendications précédentes, dans laquelle les données dynamiques de l'occupant sont fournies à intervalles de temps.

6. La méthode (100) selon l'une des revendications précédentes, dans laquelle les données dynamiques de l'occupant sont fournies en temps réel.

7. La méthode (100) selon l'une quelconque des revendications précédentes, dans laquelle les données biométriques comprennent une matrice de valeurs et/ou les données dynamiques sur les occupants comprennent une matrice de valeurs.

8. La méthode (100) selon l'une quelconque des revendications précédentes, dans laquelle le premier algorithme d'apprentissage automatique est configuré pour déterminer les points clés manquants sur la base des données d'image.

9. La méthode (100) selon l'une quelconque des revendications précédentes, dans laquelle le premier algorithme d'apprentissage automatique est entraîné avec les données biométriques et/ou le deuxième algorithme d'apprentissage automatique est entraîné avec les données biométriques et les données dynamiques relatives à la tête.

10. La méthode (100) selon l'une quelconque des revendications précédentes, dans laquelle les données d'image comprennent au moins une première vue (40) de l'occupant et une deuxième vue (42) de l'occupant.

11. Élément de programme d'ordinateur contenant des instructions qui, lorsqu'il est exécuté sur un dispositif informatique d'un environnement informatique, est configuré pour mettre en œuvre le procédé (100) selon l'une quelconque des revendications précédentes.

12. Système de traitement de données (10) comprenant des moyens pour mettre en oeuvre le procédé (100) selon l'une quelconque des revendications 1 à 11.

13. Véhicule (11) comprenant un système de traitement de données selon la revendication 12.
